# EUROPEAN PATENT APPLICATION

(11) **EP 2 635 042 A1**
(43) Date of publication of application: **04.09.2013**
(21) Application number: 11712276.2
(22) Date of filing: 03.01.2011
(51) Int. Cl.: H04R 1/02, H04R 5/02, G06F 1/16, F16M 11/00

(54) **SUPPORTING DEVICE FOR AUDIOVISUAL PLAYBACK APPARATUSES**

(30) Priority: 27.10.2010 ES 201031073 U
(71) Applicant: Woxter Technology Co. Limited, Hong Kong (CN)
(72) Inventor: PARRAGA GIMENO, Javier, E-28014 Madrid (ES)
(74) Representative: Carvajal y Urquijo, Isabel
(86) International application number: PCT/ES2011/070001
(87) International publication number: WO 2012/056062

(57) **Abstract**

Support stand for audio-visual reproduction appliances with speakers, which comprises speaker support means (14) of a magnetic kind; telescopic arms (7) that are fitted at their free end with support means (14); a base plate (1) with a front shelf (2), folding down onto this plate, and with a rear support leg (3), likewise folding-down onto the plate, to which the telescopic arms (7) are jointed. The front shelf (2) and rear leg (3) are jointed on opposite sides of the base plate, according to axes (5,6) parallel to the telescopic arms (7). Applicable for small-sized, hand-held, mobile audio or video reproduction appliances, to act as a means both for supporting the reproduction appliance and the speakers on any level surface.

## Description

### Field of the invention

The present invention refers to a support stand for audio-visual reproduction appliances, such as hand-held mobile devices, while it may also be used for coupling speakers that are detachable from the reproduction appliance proper.

The support stand of the invention is specially designed for supporting small-sized, hand-held, mobile audio or video reproduction appliances, to act as a means supporting both the reproduction appliance and the speakers on' any horizontal surface, for example on work benches, -computer equipment, etc.

### Background of the invention

**-** The use of relatively small-sized audiovisual reproduction appliances is becoming increasingly more common in the home and at the workplace; the reproduction appliance is normally placed on any surface and it is viewed or listened to without any stand and it has no supporting base, all of which may prove to be an inconvenience or nuisance, besides the fact that the reproduction capabilities are not utilized in an optimum manner in ergonomic terms.

### Description of the invention

The object of the present invention is a portable, sturdy, fully-folding support for sound and video reproduction appliances, so that any hand-held reproduction appliance set in place on a support stand which enables it to be viewed or listened to in an ergonomically optimum way, maintaining at the same time the orientation of the image and of the sound at an optimum sensorial (sight and hearing) angle for the user, with the possibility even of attaching external speakers, while making it at the same time fully folding, small-sized and easily portable.

The support stand of the invention is designed so that it may act as a means of support both for the reproduction appliance and its speakers, in an arrangement ideal for its sensorial enjoyment in which the actual reproduction unit and the optional speakers are separated from the working surface, so that they do not represent an obstacle of any kind, while at the same time they are protected from impacts, falls and, in general, unwanted occurrences.

The support stand of the invention may be placed on any horizontal surface, both on the working surface and on appliances or units used in the activity being performed.

In accordance with the invention, the stand comprises means for support of the speakers of a magnetic or ferromagnetic nature. These means may consist of a piece of a ferromagnetic nature, whether magnetized or not, which would act as the means for securing the speaker, provided with a ferromagnetic core, which, in turn, may or may not be magnetized.

The support means of a magnetic or ferromagnetic kind may be mounted on telescopic arms, jointed to this stand.

The support stand may be made up of a base plate provided with a front shelf folding down onto the plate, a rear support leg, also folding down onto the plate, and two telescopic lateral arms either folding onto the plate or the main body.

The front shelf and rear support leg are jointed to the plate or main body, on opposite surfaces, according to axes parallel to the telescopic arms. In its open position, the shelf acts as a means of support for the audio-visual reproduction appliance. The function of the rear support leg is to hold the plate upright, in a slightly backward-inclined position, (approximately 60° from the horizontal axis to the support plane) and, as described, on which a shelf is attached for supporting the audiovisual reproduction appliance.

As regards the telescopic arms, they are jointed to the plate at points that are aligned in a direction parallel to the front shelf and rear support leg swivel pins, according to axes perpendicular to the plate. These arms are provided with means, preferably magnetic, for retaining the reproduction appliance speakers.

The front shelf, the rear support leg and the lateral telescopic arms have stops that limit an open and extended position for use.

The base plate, as well as the folding shelf, rear support leg and telescopic arms, may be made from plastic or metallic material.

The base plate may have a rectangular outline, with the front shelf and rear support leg swivel pins running in a transverse direction. The lateral arms are jointed to the plate on the same side as the support leg, at points close to the longitudinal margins of this plate. In addition, the plate may be provided with recesses or undercuts on both sides in which both the shelf and the telescopic arms will be housed in their folded-back position. These recesses are also able to define the stops limiting the maximum opening position of the shelf and the telescopic arms.

The means for supporting the speakers may consist of magnets fitted in housing rings formed at the free end of the outer section of the telescopic arms. The speakers will be secured on these magnets due to the magnetic nature of their components.

The stand of the invention may be placed in the position for use by means of the rear support leg, with the plate inclined slightly backward, the position in which the open shelf acts as a means for supporting the music reproduction appliance. The speakers, sustained by the support means located at the ends of the telescopic arms, will be placed on either side of this appliance.

### Short description of the drawings

The attached drawings show, for illustrative non-restrictive purposes, a support stand for audio-visual reproduction appliances, constructed in accordance with the invention. In the drawings:
Figure 1 is a front perspective of a support stand for audio-visual reproduction appliances, constructed in accordance with the invention.
Figure 2 is a rear perspective of the same support stand.
Figure 3 is a side elevational view of the support stand of figures 1 and 2.
Figure 4 is a side elevational view of the support stand, with the telescopic arms cross-sectioned according to cut line IV-IV in figure 1.
Figure 5 is a partial longitudinal section of the support stand, taken according to the cut line V-V in figure 2.
Figure 6 is a cross-section of the end of one of the telescopic arms, taken according to the cut line VI-VI in figure 2.
Figure 7 is a view similar to figure 2, showing another version of execution.

### Detailed description of a mode of embodiment

The construction and features of the support stand of the invention will be better appreciated with the following description, produced with reference to the specimen embodiment shown in the adjoining drawings.

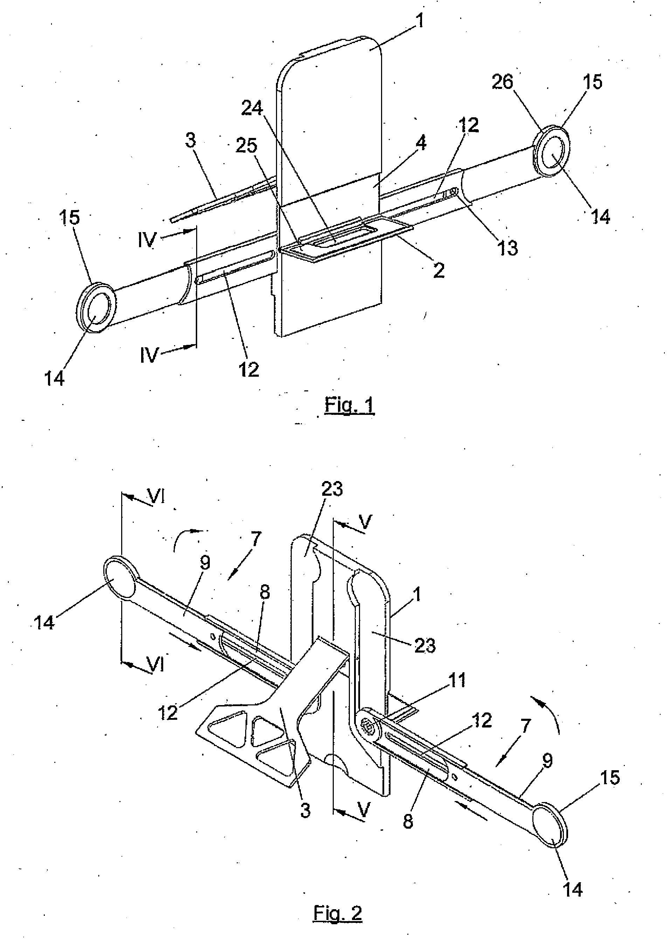

Figures 1 to 3 show a support stand for music reproduction appliances, constructed in accordance with the invention, which is made up of a base plate, of rectangular outline in the example represented, which is fitted with a front shelf 2 and a rear support leg 3, both jointed to the base plate 1 according to transverse axes which enable both components to be swivelled between a position for use, shown in figures 1 to 3, and a folded-down position in which shelf 2 abuts on the base plate 1, engaged in a recess 4 formed in this base plate. In the same way, the rear support leg 3 is folded down onto the rear surface of the base plate 1.

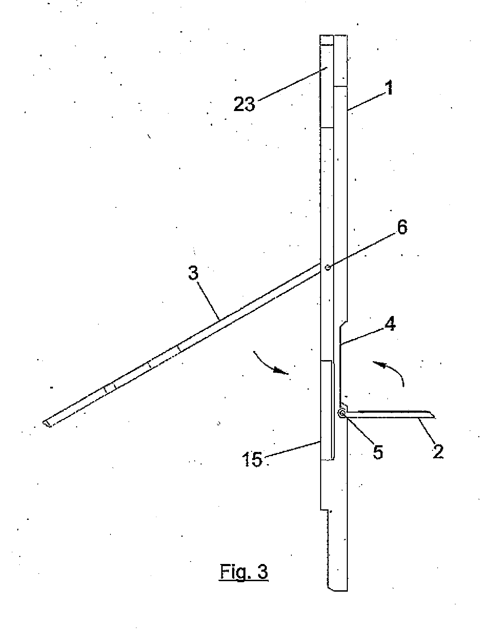

The front shelf 2 and the rear support leg 3 swivel pins are indicated in figure 3 with references 5 and 6.

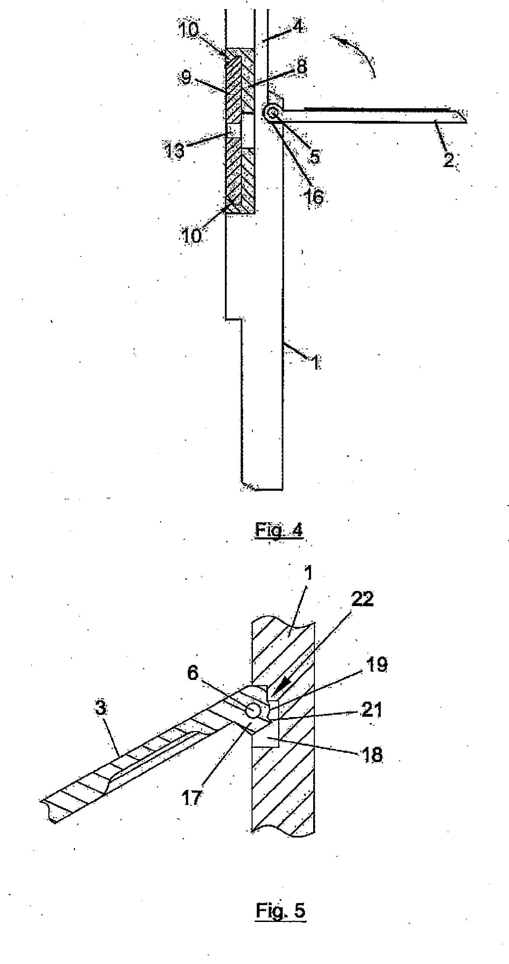

The base plate 1 is also fitted with two lateral telescopic arms 7, each of which is made up of an inner section 8' and an outer section 9. These, as may be seen in figure 4, are engaged longitudinally by male and female angle sections, which are indicated in general with reference 10. The inner section 11 is jointed to the base plate 1 by means of a pin 11 perpendicular to this plate. The swivel points 11 of the two pins are aligned in a direction parallel to the hinge pins 5 and 6 of the shelf 2 and rear support 3. In addition, the inner section 8 of the telescopic arms has a longitudinal slot 12 along which runs a sliding rivet 13, figure 4, which acts as a means of connection of the sections 8 and 9 of the arms 7 and, in addition, as a stop that limits how far section 9 can be extended from section 8.

The outer section 9 of the telescopic arms is provided at its free end with means for supporting the speakers. In the example described, these means are composed of a magnet 14, which is installed in a housing ring 15 formed by the end of section 9.

As may be seen in figure 4, the front recess or undercut 4 in the base plate 1 is limited inferiorly by a step 16 which acts as a stop for limiting the opening of the shelf 2.

As may be seen in figure 5, the rear support leg 3 terminates superiorly in a flared portion 17 housed in a recess 18 in the base plate 1, in which it pivots between the vertical walls of this recess by means of the corresponding pin 6. The flared portion 17 presents an arched profile 19, which is confined between two steps 20 and 21. The arched profile 19 is aligned with an angle edge 22 which stands out from the bottom of the recess 18 and which is tangent to the aforesaid arched profile 19. One or other of the steps 20 or 21 rests against the angle edge 22 in the leg unfolded or folded-down position, respectively.

Figures 1 to 3 show the support stand of the invention in position for use, in which this stand may be placed on any surface, for instance on a work bench. The music reproduction appliance may be placed on shelf 2, while the speakers may be secured on the magnets, situated on either side of the music reproduction appliance.

As may be observed in figure 3, the base plate 1 is provided on its rear side with recesses 23 adjacent to the longitudinal edges of this base plate, after the pivot points of the telescopic arms, recesses or undercuts which are sized to house the telescopic arms in the retracted and unfolded position on the base plate. In this way, when the support stand is retracted, the front shelf 2 and the rear support leg 3 are folded down onto the corresponding surfaces of the base plate 1, with the shelf 2 housed in the recess 4. The telescopic arms 7 are retracted and folded onto the rear recesses or undercuts of the base plate 1, the space occupied by the support stand being minimal in its retracted position.

The recesses or undercuts 23 define inferiorly supports for the arms 7 in their unfolded position of figure 2, forming the stops that limit the extended position for use.

As may be observed in figure 1, the front shelf 2 may be provided with an opening 24 via which the reproduction appliance situated on this shelf may be connected to an external power supply for recharging purposes.

The front shelf 2 may also be provided with an upper non-slip coating 25 to prevent unwanted movements of the reproduction appliance on this shelf. In the same way, the lateral telescopic arms 7 may also have a non-slip coating 26 around the magnets 14 or in their vicinity.

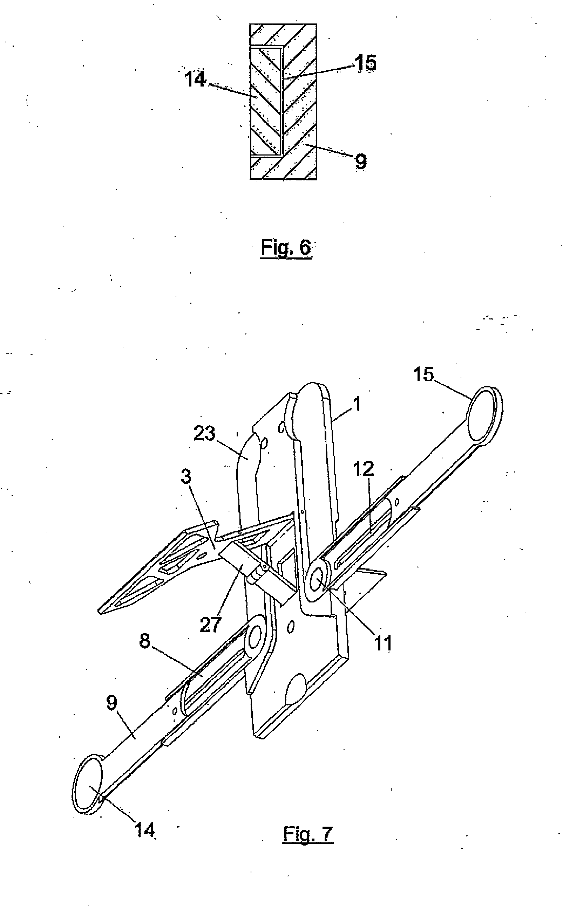

According to the execution shown in figure 7, the rear support leg 3 may be attached to the base plate 1 by way of an intermediate folding arm 27.

To secure the folded-down position of the support leg (3) and telescopic arms (7) on the base plate (1), both the base plate (1) and the support leg (3) and telescopic arms (7) may be fitted with magnetic elements or components which, through' being aligned in the retracted or folded-down position, maintain it in this position, thereby preventing the accidental opening of said support leg and (28).

## Claims

1. Support stand for audio-visual reproduction appliances with speakers, **characterized in that** it comprises means for supporting speakers of a magnetic kind.

2. Support stand according to claim 1, **characterized in that** it comprises telescopic arms (7) which are fitted with support means of a magnetic kind at its free end.

3. Support stand according to claims 1 and 2, **characterized in that** it is made up of a base plate (1) that is provided with a front shelf (2), folding down onto this plate, and of a rear support leg (3), likewise folding-down onto the plate, to which the telescopic arms are jointed(7).

4. Support stand according to claim 3, **characterized in that** the front shelf (2) and rear leg (3) are jointed on opposite sides of the base plate, according to axes (5 and 6) parallel to the telescopic arms (7).

5. Support stand according to claim 3, **characterized in that** the telescopic arms (7) are jointed to the base plate according to axes (11) perpendicular to this plate, at symmetrical points aligned in a direction parallel to the front shelf and rear support leg pivot pins.

6. Support stand according to claim 3, **characterized in that** the front shelf (2), the rear support leg (3) and the telescopic arms (7) are provided with stops limiting a maximum opening and extension position.

7. Support stand according to claim 3, **characterized in that** the base plate (1) has a rectangular outline, the swivel pins (5 and 6) of the front shelf (2) and rear support leg (3) runs in a transverse direction, and the side arms (7) are jointed to the plate on the same side as the support leg, at points adjoining the longitudinal margins of the plate.

8. Support stand according to claim 7, **characterized in that**, on the swivel surfaces of the lateral arms (7), as of the swivel points of these arms and from their longitudinal edges, the base plate is provided with recesses or undercuts (23) each sized to house the lateral arms in their retracted and folded-down position, while said recesses also form stops limiting the unfolding of the unfolding of the lateral arms up to a position in which they are aligned with each other.

9. Support stand according to claim 7, **characterized in that** on its front side the base plate (1) is provided with a recess (4), situated immediately above the front shelf swivel pin (5), which is sized to house this shelf in its folded-down position, with said recess defining inferiorly a stop (16) which limits the opening of shelf until it forms an angle of 90° with the plate.

10. Support stand according to claim 7, **characterized in that** the support leg (3) terminates superiorly in a flared portion (17) which is housed in a recess (18) in the plate and pivots between the vertical walls of this recess, while the flared portion has an arched profile (19), confined between two steps (21), which is aligned with an angle corner (22) standing out from the bottom of the recess, tangent to the arched profile, against which either one of the steps (20-21) rests in the support leg open or folded down positions, respectively.

11. Support stand according to claims 1 and 2, **characterized in that** the means for supporting the speakers consist of pieces (14) of a magnetic kind that are fitted in housing rings (15) formed in the free end of the outer section (9) of the telescopic arms.

12. Support stand according to claim 2, **characterized in that**, at their ends in the vicinity of the support means of a magnetic kind, the telescopic arms (7) provided with a non-slip coating (26).

13. Support stand according to claim 3, **characterized in that** the front shelf 2 has a central opening (24) and an upper non-slip coating (25).

14. Support stand according to claim 4, **characterized in that** the rear support leg (3) is also linked to the base plate by means of a folding intermediate arm (27).

15. Support stand according to claim 3, **characterized in that** the base plate (1), the rear support leg (3) and the telescopic arms (7) are fitted with magnetic elements that are aligned in the folded position of said leg and arms.
